# EUROPÄISCHE PATENTSCHRIFT

(11) **EP 2 008 845 B1**
(45) Veröffentlichungstag und Bekanntmachung des Hinweises auf die Patenterteilung: **15.08.2012**
(21) Anmeldenummer: 08011810.2
(22) Anmeldetag: 30.06.2008
(51) Int. Cl.: B60J 5/04, E05D 15/30, E05F 15/04

(54) **Türantriebsträger für eine Innenschwenktür eines Omnibusses**
Drive support for an inward pivoting door of a bus
Support d'unité d'entraînement pour une porte pivotante à l'intérieur d'un autobus

(30) Priorität: 30.06.2007 DE 102007030531
(43) Veröffentlichungstag der Anmeldung: 31.12.2008
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Stephany, Fredi, 68519 Viernheim (DE)
(74) Vertreter: König, Beate

(56) Entgegenhaltungen:
- EP-A- 0 819 815
- EP-A- 1 258 591
- DE-U1-202005 003 055
- US-A- 4 087 939

## Beschreibung

Die Erfindung betrifft einen Türantriebsträger für eine Schwenktür, insbesondere eine Innenschwenktür eines Omnibusses, der in Obergriff des Anspruchs 1 angegebenen Art.

Ein derartiger Türantriebsträger ist beispielsweise bereits aus der DE 20 2005 003 055 O1 als bekannt zu entnehmen und umfasst dort ein Grundteil, an welchem zwei Stellelemente in Form von Antriebszylindern der jeweiligen Schwenktüren unter Vermittlung von jeweiligen Lagerbolzen abgestützt sind.

Die EP1258591 A1 zeigt einen gattungsemäßen Türantriebsträger. Das Grundteil des Türantriebsträgers wird bislang aus einer Mehrzahl von in Profiltechnik gestalteten Einzelteilen gebildet, welche anschließend durch eine Mehrzahl von Schweißverbindungen zusammengebaut werden. Die Mehrzahl von Einzelteilen ist dabei insbesondere erforderlich, um den Schweißverzug und die Richtarbeiten zu reduzieren, damit für die üblicherweise unterhalb des Türantriebsträger angeordneten Laufschienen der Schwenktüren bzw. Schwenkschiebetüren eine hinreichende Toleranzgenauigkeit bereit gestellt werden kann. Durch die bisher verwendeten Schweißverbindungen wird zudem eine hinreichende Steifigkeit erreicht, um eine gute Abstützung der jeweiligen Stellelemente zu erreichen.

Als problematisch bei den bisherigen Grundteilen ist jedoch insbesondere der Umstand anzusehen, dass die Schweiß- und Richtarbeiten äußerst aufwändig sind und darüber hinaus der Zusammenbau der mehreren Einzelteile des Grundteils ein erhebliches Gewicht aufweist.

Aufgabe der vorliegenden Erfindung ist es daher, einen Türantriebsträger der eingangs genannten Art zu schaffen, welcher auf einfachere und kostengünstigere Weise herstellbar ist. Eine weitere Aufgabe der vorliegenden Erfindung besteht darin, einen Türantriebsträger zu schaffen, welcher mehrere Funktionalitäten aufweist.

Diese Aufgabe wird erfindungsgemäß durch einen Türantriebsträger mit den Merkmalen des Patentranspruchs 1 Türantriebsträger mit den Merkmalen des Patentanspruchs 1 gelöst. Vorteilhafte Ausgestaltungen mit zweckmäßigen und nicht-trivialen Weiterbildungen der Erfindung sind in den abhängigen Patentansprüchen angegeben.

Um einen Türantriebsträger zu schaffen, welcher einfach und kostengünstig herstellbar ist, ist vorgesehen, dass das Grundteil des Türantriebsträgers als einteiliges Blechbiegeteil ausgebildet ist. Mit anderen Worten ist vorgesehen, das Grundteil nunmehr nicht mehr aus einer Vielzahl von miteinander zusammengeschweißten Einzelteilen herzustellen, sondern vielmehr ein einteiliges Blechbiegeteil einzusetzen. Hierdurch lässt sich nicht nur eine kostengünstigere Fertigung realisieren, sondern darüber hinaus reduzieren sich auch die bei Schweißarbeiten üblichen Richtarbeiten sowie das Gewicht des Grundteils insgesamt.

Ein weiterer Vorteil eines derartigen einteiligen Blechbiegeteils besteht darin, dass durch die Kaltverformung und den Zuschnitt des Grundteils eine höhere Genauigkeit in der Herstellung sowie eine höhere Steifigkeit gegeben ist.

Um des Weiteren einen Türantriebsträger zu schaffen, welcher mehrere Funktionalitäten zusammenfasst, ist es erfindungsgemäß vorgesehen, dass das Grundteil Mittel zur Befestigung eines mit dem Stellelement verbundenen Antriebsaggregats umfasst. Mit anderen Worten ist es demzufolge gemäß Patentanspruch 2 vorgesehen, das Grundteil des Türantriebsträgers nicht wie bisher üblich nur zur Abstützung bzw. Lagerung des wenigstens einen Stellelements (Antriebszylinder) der Schwenktür dient, sondern darüber hinaus zumindest auch zur Halterung eines Antriebsaggregats, welches mit dem Stellelement verbunden ist. Im vorliegenden Ausführungsbeispiel umfasst dieses Antriebsaggregat eine Mehrzahl von Ventilen, mittels welcher ein Arbeitsfluid für das jeweilige Stellelement gesteuert bzw. geregelt werden kann.

In weiterer Ausgestaltung der Erfindung hat es sich darüber hinaus als vorteilhaft gezeigt, wenn das Stellelement unmittelbar an dem Grundteil gelagert ist. Hierdurch ergibt sich in besonders vorteilhafter Weise eine besonders stabile und einfache Abstützung des Stellelements an dem Grundteil.

In weiterer Ausgestaltung der Erfindung hat es sich als zudem vorteilhaft gezeigt, wenn das Grundteil zur Halterung eines Lagerbolzens einen im Wesentlichen U-förmigen Querschnitt aufweist. Ein solcher U-förmiger Querschnitt sorgt dabei für eine besondere Stabilität des Grundteils bei der einerseitigen Abstützung des Stellelements.

Als zudem vorteilhaft hat es sich gezeigt, wenn das Grundteil Mittel zur Befestigung eines Klemmhalters für das mit dem Stellelement verbundenen Antriebsaggregat und für den Lagerbolzen des Stellelements umfasst. Der Klemmhalter sorgt dabei für eine äußerst stabile und steife Abstützung sowohl des Lagerbolzens des Stellelements wie auch des Antriebsaggregats.

Das Grundteil und der Klemmhalter bilden dabei bevorzugterweise eine Befestigungsebene für das mit dem Stellelement verbundene Antriebsaggregat, so dass dieses zuverlässig und einfach am Grundteil bzw. am Türantriebsträger festgelegt werden kann. Zudem ist es hierdurch möglich, dass das Grundteil und der Klemmhalter mit dem Antriebsaggregat einen steifen Verbund bilden, wodurch sich beispielsweise die besonders vorteilhafte Aussteifung des Türantriebsträgers zur Abstützung des Stellelements bzw. zur Führung der Schwenktür ergibt.

Das Grundteil ist gemäß der Erfindung mit einer vorzugsweise unterhalb angeordneten Trägerschiene verbunden, wodurch sich wiederum ein äußerst torsions- und biegesteifer Gesamtkomplex realisieren lässt. Die Trägerschiene umfasst dabei ein Oberteil und ein Unterteil, welche unter Vermittlung von Klemmteilen miteinander verbunden sind. Hierdurch lässt sich gleichermaßen eine einfach hergestellte und äußerst steife Trägerschiene bzw. ein äußerst steifer Türantriebsträger insgesamt realisieren. Weitere Merkmale der Erfindung sind im Kennzeichen des Anspruchs 1 aufgeführt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische und ausschnittsweise Perspektivansicht auf ein Türportal für zwei gegenläufig bewegbare Innenschwenktüren eines Omnibusses, wobei oberseitig der beiden Innenschwenktüren ein Türantriebsträger portalseitig festgelegt ist, welcher ein aus einem einteiligen Blechbiegeteil hergestelltes Grundteil umfasst, an welchem jeweils ein Stellelement in Form eines Antriebszylinders für die jeweilige Innenschwenktür gelagert bzw. abgestützt ist, und wobei für jedes Stellelement jeweils ein Antriebsaggregat am Grundteil festgelegt ist;
- Fig. 2: eine schematische und ausschnittsweise Perspektivansicht von schräg außen auf den Türantriebsträger mit dem Grundteil, an welchem die jeweiligen Stellelemente schwenkbar gelagert bzw. abgestützt sind, wobei jedem der Stellelemente ein korrespondierendes Antriebsaggregat zugeordnet ist;
- Fig. 3: eine schematische Perspektivansicht auf den Türantriebsträger mit dem Grundteil gemäß den Figuren 1 und 2, wobei unterseitig des Grundteils eine ein Oberteil und ein Unterteil umfassende Trägerschiene angeordnet ist;
- Fig. 4: eine schematische Schnittansicht durch einen Lagerbolzen, über welchen das jeweilige Stellelement mit dem Grundteil schwenkgelagert verbunden ist;
- Fig. 5: eine vergrößerte Schnittansicht des Details V in Fig.4;
- Fig. 6: eine schematische Perspektivansicht von außen her auf den Zusammenbau des Grundteils mit der Trägerschiene;
- Fig. 7: eine schematische und perspektivische Explosionsdarstellung von außen her auf das ausschnittsweise dargestellte Grundteil im Bereich eines Lagerbolzens für das korrespondierende Stellelement, wobei oberseitig des Grundteils ein Klemmhalter vorgesehen ist, der gemeinsam mit dem Grundteil eine Befestigungsebene für das korrespondierende Antriebsaggregat des Stellelements bildet, wobei der Zusammenbau bestehend aus dem Grundteil, dem Klemmhalter und dem Antriebsaggregat einen steifen Verbund bildet; und in
- Fig. 8: eine Perspektivansicht auf eine Lagerhülse, welche außenumfangsseitig des Lagerbolzens zwischen diesem und dem korrespondierenden Stellelement angeordnet ist.

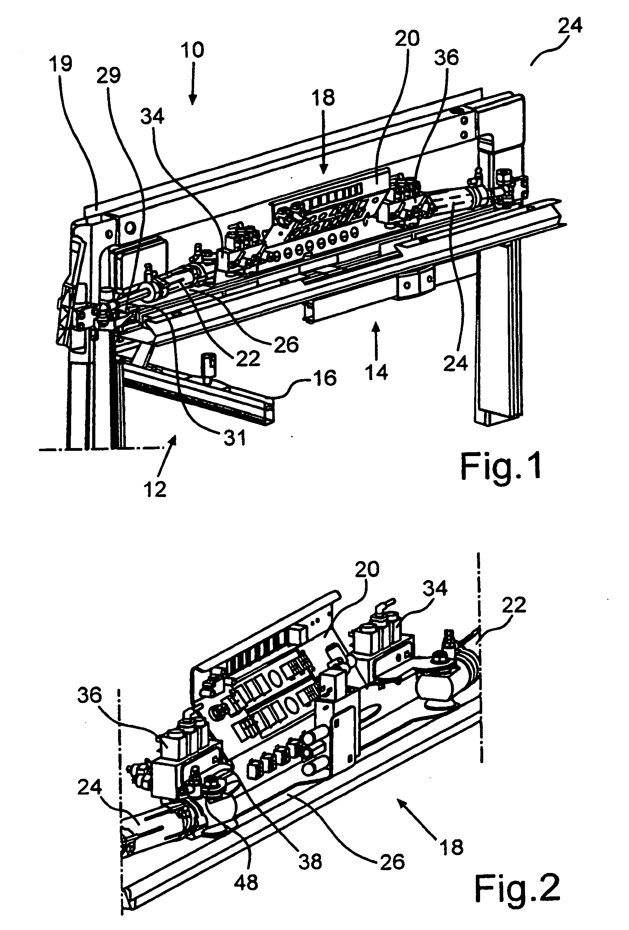

In Fig. 1 ist in einer schematischen und ausschnittsweisen Perspektivansicht von innen her das obere Ende eines Türportals 10 für zwei Innenschwenktüren 12, 14 eines Omnibusses dargestellt. Das Türportal 10 ist dabei als Einbaumodul ausgebildet, welches komplett in einer Seitenwand des Omnibusses eingebaut werden kann.

Von den Innenschwenktüren 12, 14, welche gegenläufig zueinander öffnen, ist lediglich ein jeweiliges oberes Profilteil 16 erkennbar. Während die Innenschwenktür 12 in ihrer Offenstellung gezeigt ist, ist die Innenschwenktür 14 in ihrer Schließstellung dargestellt.

Oberseitig der beiden Innenschwenktüren 12, 14 ist ein im Weiteren noch näher erläuterter Türantriebsträger 18 angeordnet, welcher in Überdeckung mit dem Türportal 10 liegt. Insbesondere aus Fig. 1 sind darüber hinaus noch jeweilige obere Drehsäulenlager 19, an welchen die den Innenschwenktüren 12, 14 jeweils zugeordnete Drehsäule schwenkbar gelagert ist. Der Türantriebsträger 18 soll nun in Zusammenschau mit den Figuren 2 bis 5 näher erläutert werden.

Hierzu zeigt Fig. 2 in einer schematischen und ausschnittsweisen Perspektivansicht von der Außenseite her den Türantriebsträger 18. Dabei wird insbesondere ein Grundteil 20 erkennbar, an welchem vorliegend zwei Stellelemente in Form von jeweiligen Antriebszylindern 22, 24 für die zugeordneten Innenschwenktüren 12, 14 die auf im weiteren noch näher beschriebene Weise gelagert bzw. abgestützt sind. Das Grundteil 20 selbst ist dabei als einteiliges Blechbiegeteil in einem Kaltumformprozess gestaltet. Hierdurch ergibt sich einerseits eine besonders einfache Fertigung des Grundteils 20 und - bedingt durch die Kaltverformung - eine höhere Genauigkeit in der Herstellung sowie eine steife Abstützung der darin gehaltenen Bauteile, beispielsweise der beiden Antriebszylinder 22, 24.

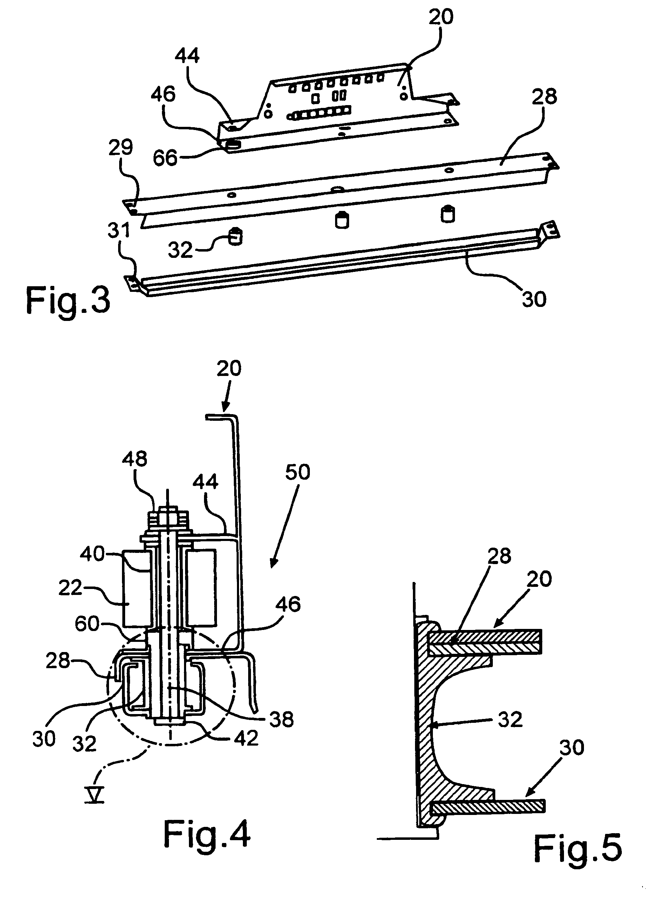

Das Grundteil 20 ist - wie aus Fig. 2 erkennbar- oberseitig einer Trägerschiene 26 angeordnet, welche insbesondere unter Bezugnahme auf die Figuren 3 bis 5 näher erkennbar ist.

Fig. 3 zeigt hierzu eine Explosionsdarstellung des Grundteils 20 sowie eines Oberteils 28 und eines Unterteils 30 der Trägerschiene 26. Das Oberteil 28 und das Unterteil 30 sind vorliegend als Blechbiegeteile ausgestaltet und unter Vermittlung einer Mehrzahl von Klemmteilen 32 miteinander verbunden. Die Trägerschiene 26 ist dabei in das Portal 10 eingepasst, wobei das Unterteil 30 als Führungsschiene für die beiden Innenschwenktüren 12, 14 dient.

Sowohl das Unterteil 30 wie auch das Oberteil 28 umfassen jeweilige endseitige Flansche 29, 31, über welche das Oberteil 28 bzw. das Unterteil 30 an dem zugeordneten Drehsäulenlager 19 festgelegt sind. In Zusammenschau mit Fig. 1 ist dabei erkennbar, dass der jeweilige Flansch 29 des Oberteils 28 oberseitig und der jeweilige Flansch 31 des Unterteils 30 unterseitig an den zugeordneten Drehsäulenlager 19 festgelegt ist.

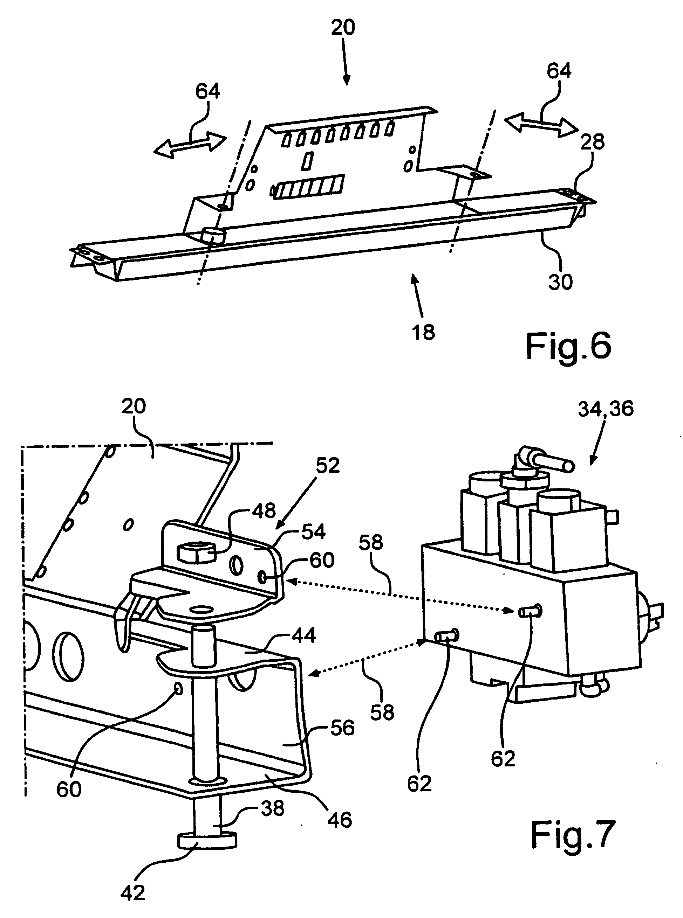

Aus Fig. 2 ist darüber hinaus erkennbar, dass über das Grundteil 20 jeweilige Antriebsaggregate 34, 36 gehalten sind, welche beispielsweise Ventile zur Steuerung eines Arbeitsfluids für den jeweiligen Arbeitszylinder 22, 24 oder Steuerelektrikkomponenten umfassen. Die konkrete Befestigung des jeweiligen Antriebsaggregats 34, 36 wird insbesondere unter Zusammenschau mit Fig. 6 im weiteren noch näher erläutert werden.

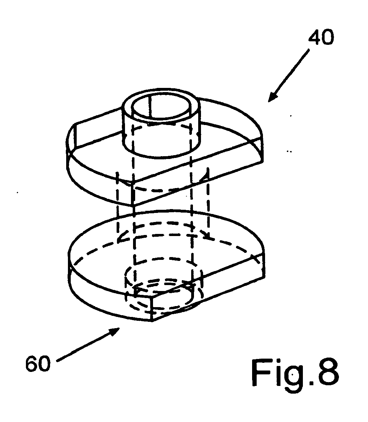

In Fig. 4 ist in einer schematischen Schnittansicht der Türantriebsträger 5 im Bereich eines Lagerbolzens 38 dargestellt, welcher - wie aus Fig. 2 erkennbar ist - zur Lagerung des jeweils zugeordneten Antriebszylinders 22, 24 dient. Fig. 5 zeigt des Weiteren in einer vergrößerten Schnittansicht das Detail V in Fig.4, aus welchem die Anordnung des Lagerbolzens 38 im Bereich des korrespondierenden Klemmteils 32 erkennbar wird. Der Lagerbolzen 38 ist dabei außenumfangsseitig von einem Lagerklemmteil 40 umgeben, welches in Fig. 8 in einer schematischen Perspektivansicht gezeigt ist. Der Lagerbolzen 38 stützt sich dabei mit einem Kopf 42 unterseitig an dem Unterteil 30 der Trägerschiene 26 ab. Im Bereich der Trägerschiene 26 ist der Lagerbolzen 38 außenumfangsseitig von dem korrespondierenden Klemmteil 32 umgeben, welchen in seiner Länge an den Abstand zwischen Oberteil 28 und Unterteil 30 angepasst ist. Somit wird durch das jeweilige Klemmteil 32 vermieden, dass das Oberteil 28 bzw. das Unterteil 30 durch den Lagerbolzen 38 übermäßig verspannt werden. Das jeweilige Klemmteil 32 ist dabei vorliegend mit dem Oberteil 28, dem Unterteil 30 und dem Grundteil 20 verpresst. Während die beiden äußeren Klemmteile 32 vom jeweiligen Lagerbolzen 38 durchsetzt sind, gilt dies nicht für das mittlere Klemmteil 32. Dieses ist zudem - bezogen auf die Breitenrichtung der Trägerschiene 26 - versetzt zu den äußeren Klemmteilen 32 angeordnet.

Das Lagerklemmteil 40 (Fig. 8) ist in seiner Länge an den Abstand von zwei Schenkeln 44, 46 des Grundteils 20 auf im weiteren noch näher beschriebene Weise angepasst, so dass die beiden Schenkel 44, 46 nicht verzogen werden, wenn auf den Lagerbolzen 38 eine in den Figuren 2, 4 und 7 erkennbare Mutter 48 aufgeschraubt wird.

In Fig. 7 ist in einer schematischen und perspektivischen Explosionsdarstellung ausschnittsweise das Grundteil 20 im Bereich eines der Lagerbolzen 38 erkennbar. Dabei ist ersichtlich, dass die beiden Schenkel 44, 46 einen in diesem Bereich O-förmigen Querschnitt 50 des Grundteils 20 zugeordnet sind. Die Schenkel 44, 46 sind somit ebenfalls einteilig mit dem Grundteil 20 ausgebildet.

Aus Fig. 7 ist darüber hinaus erkennbar, dass mittels des Lagerbolzens 38 ein Klemmhalter 52 mitverschraubt ist, welcher seinerseits im Wesentlichen winkelförmig gestaltet ist. Ein in Fahrzeughochrichtung verlaufender Schenkel 54 bildet dabei mit einem ebenfalls in Fahrzeughochrichtung verlaufenden, zur Innenseite gewanden Wandbereich 56 des Grundteils 20 eine im Wesentlichen in Fahrzeughochrichtung bzw. in Fahrzeuglängsrichtung verlaufende Befestigungsebene für das mit dem jeweiligen Antriebszylinder 22, 24 verbundene Antriebsaggregat 34 bzw. 36. Wie mit den beiden Pfeilen 58 dargestellt, sind sowohl am Grundteil 20 wie auch am Klemmhalter 52 Mittel zur Befestigung des Antriebsaggregats 34 bzw. 36 in Form von Öffnungen 60 vorgesehen, in welche Schraubbolzen 62 auf Seiten des Antriebsaggregats 34 bzw. 36 einsteckbar sind. Die entsprechende Befestigung der Schraubbolzen 62 erfolgt über nicht gezeigte Muttern.

Aus Fig. 7 ist somit insbesondere erkennbar, dass das Grundteil 20 und der Klemmhalter 52 gemeinsam mit dem jeweiligen Antriebsaggregat 34 bzw. 36 einen steifen Verbund bilden, so dass sich insgesamt eine äußerste steife Abstützung bzw. Lagerung beispielsweise der Antriebszylinder 22 bzw. 24 ergibt. Erst mit dem Anschrauben des Antriebsaggregats 34 bzw. 36 ist der Verbund mit dem Klemmhalter 52 und dem Grundteil 20 somit in allen Richtungen stabil.

Anhand von Fig. 6, welche das Grundteil 20 sowie die Trägerschiene 26 - bestehend im Wesentlichen aus dem Oberteil 28 und dem Unterteil 30 - in einer schematischen Perspektivansicht von außen her zeigt, sollen nun die am Türantriebsträger 18 angreifenden Kräfte näher erläutert werden. So zeigen zunächst zwei Doppelpfeile 64 die Krafteinleitungsrichtungen über die jeweiligen Antriebszylinder 22 bzw. 24.

Eine Besonderheit der vorliegende Trägerschiene 26 ist es, dass - wie oben bereits beschrieben - das Oberteil 28 und das Unterteil 30 als Bauteile ausgebildet sind, welche nicht miteinander verschweißt oder dgl. gefügt sind. Darüber hinaus ist der jeweilige Flansch 29 des Oberteils 28 oberseitig und der jeweilige Flansch 31 des Unterteils 30 unterseitig an den zugeordneten Drehsäulenlager 19 festgelegt. Da erfahrungsgemäß aufgrund von fahrbetriebsbedingten Einflüssen hohe Torsionskräfte gerade im Bereich des Türantriebsträgers 18 bzw. im Bereich der Trägerschiene 26 eingeleitet werden, kann durch die vorbeschriebene Anordnung erreicht werden, dass diese Torsionskräfte sich nicht negativ auf die Trägerschiene 26 auswirken. Dies nämlich insbesondere aufgrund der Tatsache, dass das Oberteil 28 und das Unterteil 30 separat - über den jeweiligen Flansch 29 bzw. 31 - am entsprechenden Drehsäulenlager 19 festgelegt sind und - bis zur jeweiligen Lagerbolzen 38 hin - nicht miteinander zusammengefügt sind. Somit ist die Trägerschiene 26 in ihren äußeren Endbereichen - also zwischen ihren äußeren Enden und dem jeweiligen Lagerbolzen 38 (Bereich a) insbesondere relativ torsionsweich ausgebildet und kann die eingeleiteten Torsionskräfte sehr gut aufnehmen. Zwischen den Lagerbolzen 38 bzw. im Bereich des Grundteils 20 ist die Trägerschiene 26 hingegen mittels der Klemmteile 32 sehr steif gestaltet und kann demzufolge die beispielsweise die über die jeweiligen Antriebszylinder 22 bzw. 24 entsprechend der Doppelpfeile 64 eingeleiteten Kräfte sehr gut aufnehmen.

Im Bereich A, also im Bereich des jeweiligen Lagerbolzens 38 treten dabei insbesondere Momente bei der Abstützung dieser jeweiligen Antriebszylinder 22, 24 auf, welche über das jeweilige Grundteil 20, den jeweiligen Klemmhalter 52 und auch über das jeweilige Antriebsaggregat 34, 36 aufgenommen werden können. In diesen Bereichen treten unter Anderem erhebliche Biegekräfte auf, welche insbesondere auch durch den U-förmigen Querschnitt 50 des Grundteils 20 besonders gut aufgenommen werden können.

Im Bereich B, also der Befestigung des Türantriebsträgers 18 am Drehsäulenlager 19 treten insbesondere die beschriebenen Torsionskräfte auf, welche durch die entsprechende Ausgestaltung der Trägerschiene 26 mit dem Oberteil 28 und dem Unterteil 30 ausgeglichen werden können.

Im Bereich C treten insbesondere Momente zwischen den beiden Antriebszylindern 22, 24 auf, welche durch den Verbund des Grundteils 20 mit der Trägerschiene 26 kompensiert werden können.

In den dargestellten Bereichen a erfolgt die Aussteifung in der im Zusammenhang mit Fig. 4 beschriebenen Weise, nämlich durch Unterstützung der Festigkeit im Verbund insbesondere durch die drei Klemmteile 32. Schließlich ist insgesamt erkennbar, dass durch den Verbund der jeweiligen als Spannschraube wirkenden Lagerbolzen 38 der Türantriebsträger 18 zusätzlich auf beiden Seiten ausgesteift ist. Im Bereich a sind hierzu jeweilige Distanzscheiben 66 vorgesehen, welche dem jeweiligen Lagerklemmenteil 40 (Fig. 8) zugeordnet sind.

Insbesondere durch die Ausgestaltung des Grundteils 20 als Blechbiegeteil hat sich eine Gewichtsreduzierung des jeweiligen Türantriebsträgers um 6kg realisieren lassen. Es ist somit erkennbar, dass mit dem vorliegenden Türantriebsträger nicht nur eine Reduzierung des Herstellungsaufwands und der Kosten möglich ist, sondern auch einen Reduktion des Gewichts.

### Bezugszeichenliste

- 5: Türantriebsträger
- 10: Türportal
- 12,14: Innenschwenktüren
- 16: oberes Profilteil
- 18: Türantriebsträger
- 19: Drehsäulenlager
- 20: Grundteil
- 22,24: Antriebszylinder
- 26: Trägerschiene
- 28: Oberteil der Trägerschiene
- 29: Flansch von 28
- 30: Unterteil der Trägerschiene
- 31: Flansch von 30
- 32: Klemmteil
- 34,36: Antriebsaggregate
- 38: Lagerbolzen
- 40: Lagerklemmteil
- 42: Kopf des Lagerbolzens
- 44,46: Schenkel des Grundteils
- 48: Mutter
- 50: O-förmiger Querschnitt
- 52: Klemmhalter
- 54: Schenkel in Fahrzeughochrichtung
- 56: Wandbereich
- 58: Pfeile
- 60: Öffnungen
- 62: Schraubbolzen
- 64: Doppelpfeile
- 66: Distanzscheiben

## Patentansprüche

1. Türantriebsträger für eine Schwenktür, insbesondere eine Innenschwenktür (12, 14) eines Omnibusses,
mit einem Grundteil (20),
an dem zumindest mittelbar wenigstens ein Stellelement (22, 24 - Figur 1), der Schwenktür (12, 14) abgestützt ist und
das als einteiliges Blechbiegeteil ausgebildet ist, **dadurch gekennzeichnet , dass**
das Grundteil (20) mit einer Trägerschiene (26) verbunden ist, die ein Oberteil (28) und ein Unterteil (30) umfasst, die unter Vermittlung von Klemmteilen (32) im Bereich des Grundteils (20) miteinander verbunden sind und an ihren äußeren Enden separat über jeweilige Flansche (29, 31) an einem Drehsäulenlager (19) festgelegt sind und
die Trägerschiene (26) in ihren äußeren Endbereichen torsionsweich ausgebildet ist.

2. Türantriebsträger nach Anspruch 1, dadurch **gekenn** - **zeichnet**, dass das Grundteil (20) Mittel (60) zur Befestigung eines mit dem Stellelement (22, 24 - Figur 1), verbundenen Antriebsaggregats (34, 36) umfasst.

3. Türantriebsträger nach Anspruch 1 oder 2, dadurch **ge** - **kennzeichnet** , dass das Stellelement (22, 24 - Figur 1), unmittelbar an dem Grundteil (20) gelagert ist.

4. Türantriebsträger nach Anspruch 3, dadurch **gekenn** - **zeichnet**, dass das Grundteil (20) zur Halterung eines Lagerbolzens (38) einen im Wesentlichen U-förmigen Querschnitt (50) aufweist.

5. Türantriebstrager nach Anspruch 3 oder 4, dadurch **ge** - **kennzeichnet**, dass das Grundteil (20) Mittel (60) zur Befestigung eines Klemmhalters (52) für das mit dem Stellelement (22, 24 - Figur 1), verbundene Antriebsaggregat (34, 36) und für den Lagerbolzen (38) des Stellelements (22, 24 - Figur 1), umfasst.

6. Türantriebsträger nach Anspruch 4, dadurch **gekenn** - **zeichnet**, dass das Grundteil (20) und der Klemmhalter (52) eine Befestigungsebene für das mit dem Stellelement (22, 24 - Figur 1), verbundene Antriebsaggregat (34, 36) bilden.

7. Türantriebsträger nach Anspruch 5 oder 6, **dadurch gekennzeichnet, dass** das Grundteil (20) und der Klemmhalter (52) mit dem Antriebsaggregat (34, 36) einen steifen Verbund bilden.

8. Schwenktür, insbesondere Innenschwenktür (12, 14) eines Omnibusses, mit einem Türantriebsträger (18) nach einem der Ansprüche 1 bis 7.

## Claims

1. Door drive support for a swing door, in particular an inner swing door (12, 14) of a bus,
having a base part (20),
on which at least one control element (22, 24 , figure 1), of the swing door (12, 14) is supported at least indirectly, and
which is formed as an integral bent sheet metal part,
**characterised in that**
the base part (20) is connected to a support rail (26) which includes an upper part (28) and a lower part (30) which are connected together so as to configured to be extremely rigid with the interposition of clamping parts (32) in the region of the base part (20) and are separately fixed at their outer ends to a rotary column bearing (19) via respective flanges (29, 31), and
the support rail (26) is formed to be torsionally flexible in their outer end regions.

2. Door drive support as claimed in Claim 1, **characterised in that** the base part (20) includes means (60) for attachment of a drive unit (34, 36) connected to the control element (22, 24 - figure 1).

3. Door drive support as claimed in Claim 1 or 2, **characterised in that** the control element (22, 24 - figure 1) is mounted directly on the base part (20).

4. Door drive support as claimed in Claim 3, **characterised in that** the base part (20) has a substantially U-shaped cross-section (50) for holding a bearing pin (38).

5. Door drive support as claimed in Claim 3 or 4, **characterised in that** the base part (20) includes means (60) for attachment of a clamping holder (52) for the drive unit (34, 36) connected to the control element (22, 24 - figure 1) and for the bearing pin (38) of the control element (22, 24 - figure 1).

6. Door drive support as claimed in Claim 4, **characterised in that** the base part (20) and the clamping holder (52) form an attachment plane for drive unit (34, 36) connected to the control element (22, 24 - figure 1).

7. Door drive support as claimed in Claim 5 or 6, **characterised in that** the base part (20) and the clamping holder (52) form, with the drive unit (34, 36), a rigid assembly.

8. Swing door, in particular an inner swing door (12, 14) of a bus, having a door drive support (18) as claimed in any one of Claims 1 to 7.

## Revendications

1. Support d'unité d'entraînement de porte pour porte pivotante, notamment une porte pivotante intérieure (12, 14) d'un omnibus, ledit support comportant
une pièce de base (20)
sur laquelle est supporté, au moins indirectement, au moins un élément de commande (22, 24 - figure 1), de la porte pivotante (12, 14) et
qui est conformée en pièce de tôle flexible monobloc,
**caractérisé en ce que**
la pièce de base (20) est reliée à une glissière de support (26) qui comporte une partie supérieure (28) et une partie inférieure (30) qui sont reliées entre elles par le biais de pièces de serrage (32) au niveau de la pièce de base (20) et qui sont fixées séparément, au niveau de leurs extrémités extérieures, à un palier de montant rotatif (19) par des brides correspondantes (29, 31) et
la glissière de support (26) est conformée pour être souple en torsion au niveau de ses extrémités extérieures.

2. Support d'unité d'entraînement de porte selon la revendication 1, **caractérisé en ce que** la pièce de base (20) comporte des moyens (60) destinés à fixer une unité d'entraînement (34, 36) reliée à l'élément de commande (22, 24 - figure 1).

3. Support d'unité d'entraînement de porte selon la revendication 1 ou 2, **caractérisé en ce que** l'élément de commande (22, 24 - figure 1) est monté directement sur la pièce de base (20).

4. Support d'unité d'entraînement de porte selon la revendication 3, **caractérisé en ce que** la pièce de base (20) a une section (50) sensiblement en U pour maintenir un tourillon (38).

5. Support d'unité d'entraînement de porte selon la revendication 3 ou 4, **caractérisé en ce que** la pièce de base (20) comporte des moyens (60) destinés à fixer un support de serrage (52) destiné à l'unité d'entraînement (34, 36) reliée à l'élément de commande (22, 24 - figure 1), et au tourillon (38) de l'élément de commande (22, 24 - figure 1).

6. Support d'unité d'entraînement de porte selon la revendication 4, **caractérisé en ce que** la pièce de base (20) et le support de serrage (52) forment un plan de fixation pour l'unité d'entraînement (34, 36) reliée à l'élément de commande (22, 24 - figure 1).

7. Support d'unité d'entraînement de porte selon la revendication 5 ou 6, **caractérisé en ce que** la pièce de base (20) et le support de serrage (52) forment avec l'unité d'entraînement (34, 36) une liaison rigide.

8. Porte pivotante, notamment porte pivotante intérieure (12, 14) d'un omnibus, comportant un support d'unité d'entraînement de porte (18) selon l'une des revendications 1 à 7.
